# EUROPEAN PATENT APPLICATION

(11) **EP 4 715 910 A1**
(43) Date of publication of application: **25.03.2026**
(21) Application number: 25201587.0
(22) Date of filing: 11.09.2025
(51) Int. Cl.: H01M 8/0206, C25B 9/65, H01M 8/026, H01M 8/0263

(54) **SEPARATOR, ELECTROCHEMICAL CELL, AND APPARATUS**

(30) Priority: 19.09.2024 JP 2024162498
(71) Applicant: KABUSHIKI KAISHA TOSHIBA, Kawasaki-shi, Kanagawa, 212-0013 (JP)
(72) Inventor: Hongo, Takuya, Kawasaki-shi, Kanagawa (JP); Hiraoka, Toshiro, Kawasaki-shi, Kanagawa (JP); Hosono, Yasuharu, Kawasaki-shi, Kanagawa (JP); Kitagawa, Ryota, Kawasaki-shi, Kanagawa (JP); Kofuji, Yusuke, Kawasaki-shi, Kanagawa (JP)
(74) Representative: Hoffmann Eitle

(57) **Abstract**

A separator including a flow channel 10 comprising a first flow-channel wall, a second flow-channel wall, a first flow-channel groove between the first flow-channel wall and the second flow-channel wall, and one or more first blocking walls in the first flow-channel groove. The first blocking walls close off a portion of the latter half of the first flow-channel groove.

## Description

### FIELD

Embodiments described herein relate generally to a separator, an electrochemical cell, a stack and an apparatus.

### BACKGROUND

In recent years, there has been growing anticipation for renewable energy. Examples of renewable energy include solar power generation, hydroelectric power generation, wind power generation, and geothermal power generation.

In addition, fuel cell power generation and electrolysis for energy conversion are focused for decarbonization.

### BRIEF DESCRIPTION OF THE DRAWINGS

FIG. 1 is a schematic diagram of a separator according to an embodiment;
FIG. 2 is a schematic cross-sectional diagram of a separator according to an embodiment;
FIG. 3 is a schematic cross-sectional diagram of a separator according to an embodiment;
FIG. 4 is a schematic diagram of a separator according to an embodiment;
FIG. 5 is a schematic diagram of a separator according to an embodiment;
FIG. 6 is a schematic diagram of a separator according to an embodiment;
FIG. 7 is a schematic diagram of a separator according to an embodiment;
FIG. 8 is a schematic diagram of a separator according to an embodiment;
FIG. 9 is a schematic diagram of a separator according to an embodiment;
FIG. 10 is a schematic diagram of a separator according to an embodiment;
FIG. 11 is a schematic diagram of a separator according to an embodiment;
FIG. 12 is a schematic diagram of a separator according to an embodiment;
FIG. 13 is a schematic diagram of a separator according to an embodiment;
FIG. 14 is a schematic diagram of a separator according to an embodiment;
FIG. 15 is a schematic diagram of a separator according to an embodiment;
FIG. 16 is a schematic diagram of an electrochemical cell according to an embodiment;
FIG. 17 is a schematic diagram of an electrochemical cell according to an embodiment;
FIG. 18 is a schematic diagram of a stack according to an embodiment;
FIG. 19 is a schematic diagram of an apparatus according to an embodiment; and
FIG. 20 is a schematic diagram of an apparatus according to an embodiment.

### DETAILED DESCRIPTION

A separator including a flow channel 10 comprising a first flow-channel wall, a second flow-channel wall, a first flow-channel groove between the first flow-channel wall and the second flow-channel wall, and one or more first blocking walls in the first flow-channel groove. The first blocking walls close off a portion of the latter half of the first flow-channel groove.

Hereinafter, the embodiments will be described with reference to the drawings. It is to be noted that the same reference numerals are given to common components throughout the embodiments, and redundant explanations are omitted.

In the specification, values at 25 [°C] and 1 atm (atmosphere) are shown. Each thickness of the members represents an average of distance in a stacking direction.

The thickness and structure of members described in the specification can be known, for example, from one or more of images obtained by SEM (Scanning Electron Microscope), TEM (Transmission Electron Microscope), HAADF-STEM: High-Angle Annular Dark Field Scanning Transmission Electron Microscopy), and the like. The boundaries of the members described in the specification can be determined from one or more images obtained by scanning electron microscopy or transmission electron microscopy, SEM-EDS (Scanning Electron Microscopy with Energy Dispersive X-ray Spectroscopy) or TEM-EDX (Transmission Electron Microscopy with Energy Dispersive X-ray Spectroscopy), SIMS (Secondary Ion Mass Spectrometry), and the like. The composition of the members described in the specification can be determined by one SIMS, ICP-MS (Inductively Coupled Plasma Mass Spectrometry), SEM-EDX, TEM-EDX, or the like. The crystallinity of the members described in the specification can be evaluated, for example, from XRD (X-ray Diffraction), EBSD (Electron Backscatter Diffraction), images obtained by HAADF-STEM, SEM, TEM or the like. Materials contained in the members described in the specification (crystal defects, bonding states, etc.) can be evaluated from HAADF-STEP, PL (Photoluminescence), XPS (X-ray Photoelectron Spectroscopy), or the like. These analysis methods are examples and do not negate the specific analytical methods described in the specification.

### (FIRST EMBODIMENT)

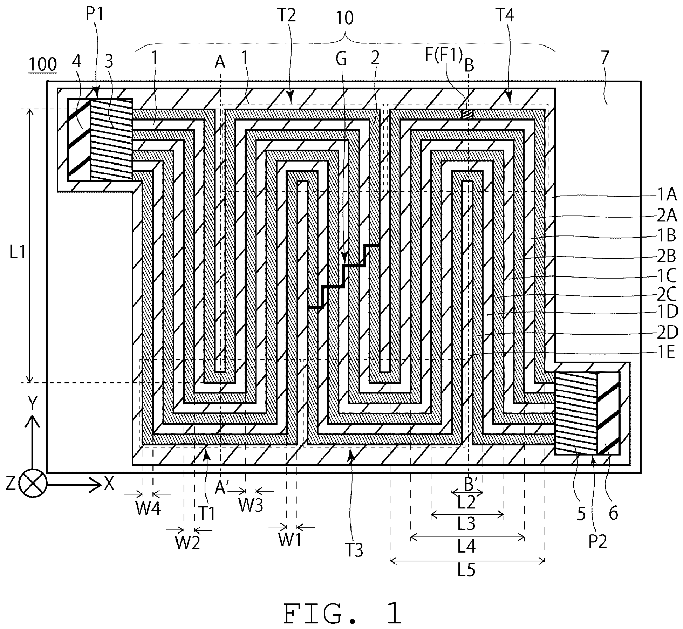

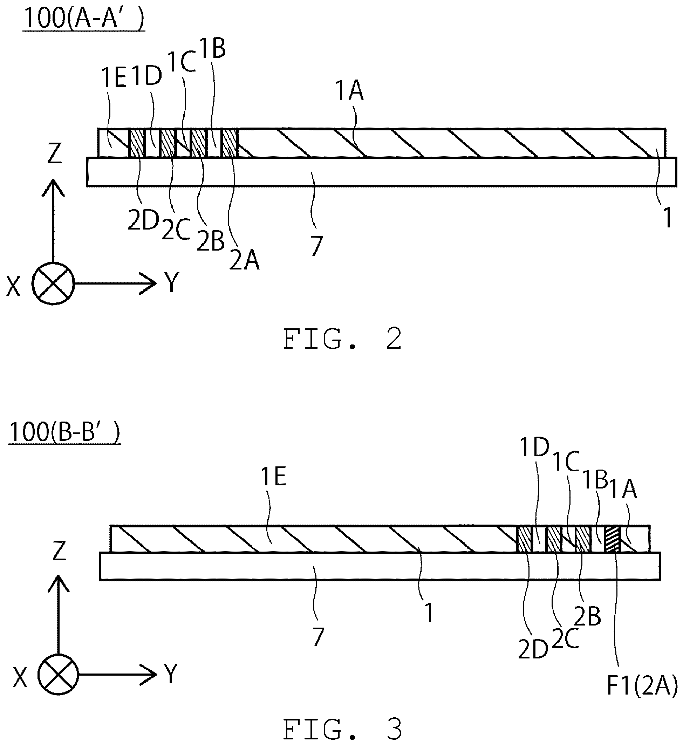

A first embodiment relates to a separator 100. FIG. 1 shows a schematic diagram of the separator 100 according to this embodiment. FIG. 2 shows schematic cross-sectional diagrams along line A-A' in FIG. 1. FIG. 3 shows schematic cross-sectional diagrams along line B-B' in FIG. 1. The separator 100 includes a flow channel 10, a supply manifold 4, an exhaust manifold 6, a supply connection channel 3, and an exhaust connection channel 5. The flow channel 10, the supply manifold 4, the exhaust manifold 6, the supply connection channel 3, and the exhaust connection channel 5 are provided on a frame 7 of the separator 100. The directions in FIG. are represented by X, Y, and Z.

The separator 100 according to the first embodiment can be used, for example, in electrochemical cells such as fuel cells or electrolytic device. The separator 100 supplies a fluid used for electrode reactions and discharges a fluid containing products of the electrode reactions. The fluids are gas and/or liquid. When the fluid discharged from the exhaust manifold 6 includes both gas and liquid, the pressure loss of the separator 100 can be effectively suppressed.

The separator 100 includes a flow channel 10 comprising flow-channel walls 1 and flow-channel grooves 2 provided between the flow-channel walls 1. The flow-channel wall 1 may surround the supply manifold 4, the exhaust manifold 6, the supply connection channel 3, and the exhaust connection channel 5.

The region sandwiched between the flow-channel walls 1 is the flow-channel groove 2. The flow-channel walls 1 may be, for example, higher level portions of metal members provided on the frame 7, or the flow-channel grooves 2 may be lower level portions provided on the metal members provided on the frame 7. Fluid flows through the flow channel 10. The flow channel 10 preferably has a plurality of flow-channel grooves 2, and it is preferable for the fluid to flow through a plurality of flow-channel grooves 2. In order for the fluid to flow across the entire porous layer of the electrode in direct contact with the separator 100 with little gaps, the flow channel 10 preferably has a serpentine flow channel shape, as shown in the schematic diagram of FIG. 1, where straight areas and turnaround areas alternately repeat.

The flow-channel walls 1 are composed of metal, for example.

The flow channel 10 has a plurality of the flow-channel grooves 2. The flow channel 10 includes a first flow-channel wall 1A, a first flow-channel groove 2A, a second flow-channel wall 1B, a second flow-channel groove 2B, a third flow-channel wall 1C, a third flow-channel groove 2C, a fourth flow-channel wall 1D, and a fourth flow-channel groove 2D, a fifth flow-channel wall 1E. The numbers of the flow-channel wall 1 and the flow-channel groove 2 are for convenience only and may not be in order in some cases. When the order of arrangement of the flow-channel grooves 2 is different (for example, the first flow-channel groove 2A, the fourth flow-channel groove 2D, the third flow-channel groove 2C, and the second flow-channel groove 2B are arranged in that order), the number of the flow-channel wall 1 sandwiching each flow-channel groove 2 will change. In the separator 100, the second flow-channel groove 2B is in direct contact with the first flow-channel groove 2A. However, depending on whether a blocking wall F exists in the first flow-channel groove 2A or other flow-channel grooves 2, the flow-channel groove 2 designated as the first flow-channel groove 2A in FIG. 1 of the separator 100 can be made into a different flow-channel groove 2 where the first blocking wall F1 exists. In this case, for the flow-channel wall 1, the flow-channel groove 2, and the blocking wall F existing at the same position as shown in drawings, different numbers may be assigned from the explanation below. The following explanation regarding the flow-channel groove 2 is not limited to a specific flow-channel groove 2.

In this embodiment, four flow-channel grooves 2 are shown; however, the number of the flow-channel grooves 2 is not limited to four and can be one or more. For example, separators with three flow-channel grooves 2, five flow-channel grooves 2, or eight flow-channel grooves 2 are also included in the embodiment separators.

The first flow-channel groove 2A is provided between the flow-channel walls. In FIG. 1, the first flow-channel groove 2A is arranged between the first flow-channel wall 1A and the second flow-channel wall 1B.

The second flow-channel groove 2B is provided between the flow-channel walls. In FIG. 1, the second flow-channel groove 2B is arranged between the second flow-channel wall 1B and the third flow-channel wall 1C.

The third flow-channel groove 2C is provided between the flow-channel walls. In FIG. 1, the third flow-channel groove 2C is arranged between the third flow-channel wall 1C and the fourth flow-channel wall 1D.

The fourth flow-channel groove 2D is provided between the flow-channel walls. In FIG. 1, the fourth flow-channel groove 2D is arranged between the fourth flow-channel wall 1D and the fifth flow-channel wall 1E.

The pitch of the flow-channel grooves 2 is preferably 0.1 [mm] or more and 5 [mm] or less, more preferably 0.3 [mm] or more and 3 [mm] or less, and even more preferably 0.5 [mm] or more and 2.5 [mm] or less.

The supply connection channel 3 is provided between the supply manifold 4 and the flow channel 10. The supply connection channel 3 is a flow channel that connects the supply manifold 4 and the flow channel 10. Fluid passing through the supply connection channel 3 flows through the flow channel 10. The supply connection channel 3 may be a concave-convex portion of the frame 7, or the supply connection channel 3 may be composed of a separate member from the frame 7. Fluid also flows in the direction where the supply connection channel 3 and the supply manifold 4 are connected.

The supply manifold 4 is an opening of the separator 100. Fluid is supplied from the supply manifold 4. Other manifolds not shown in the figure may be provided on the separator 100.

In the first embodiment, the supply connection channel 3 and the supply manifold 4 of separator 100 are provided on the first location P1 side.

The exhaust connection channel 5 is provided between the exhaust manifold 6 and the flow channel 10. The exhaust connection channel 5 is a flow channel that connects the exhaust manifold 6 and the flow channel 10. Fluid passing through the flow channel 10 and then through the exhaust connection channel 5 is discharged from the exhaust manifold 6. The exhaust connection channel 5 may be a concave-convex portion of the frame 7, or the exhaust connection channel 5 may be composed of a separate member from the frame 7.

The exhaust manifold 6 is an opening of the separator 100. Fluid is discharged from the exhaust manifold 6.

In the first embodiment, the fluid flowing through the flow channel 10 flows from the first location P1 to a second point P2.

The exhaust connection channel 5 and the exhaust manifold 6 of the separator 100 in the first embodiment are arranged on the first location P1 side.

The frame 7 is preferably insulating and composed of a resin material, for example.

One or more blocking walls F (F1 to F4) are provided in a part of the flow-channel groove 2. For example, as shown in the schematic diagram of FIG. 2, the blocking wall F is not provided at the position of the A-A' cross-section in FIG. 1, but as shown in the schematic diagram of FIG. 3, a blocking wall F is provided at the position of the B-B' cross-section in FIG. 1. The first flow-channel groove 2A is a flow-channel groove 2 with a first blocking wall F1 provided. Flow-channel grooves 2 other than the first flow-channel groove 2A are flow-channel grooves 2 with a blocking wall F provided or flow-channel grooves 2 without a blocking wall F provided.

It is preferable that the blocking wall F of the flow-channel groove 2 is provided in the latter half of the flow-channel groove 2 and not provided in the former half. When the fluid flows from the first location P1 side to the second location P2 side in the flow-channel groove 2, when the length of the flow-channel groove 2 is L, the part with a length up to L/2 from the end on the first location P1 side is defined as the former half of the flow-channel groove 2, and the part with a length up to L/2 from the end on the second location P2 side is defined as the latter half of the flow-channel groove 2. By providing a blocking wall F in a part of the flow-channel groove 2, it is possible to reduce gas contained in the fluid including liquids and gases flowing through the separator 100 from accumulating in the flow-channel groove 2.

The former halves of the first flow-channel groove 2A, the second flow-channel groove 2B, the third flow-channel groove 2C, and the fourth flow-channel groove 2D are located on the first location P1 side. The latter halves of the first flow-channel groove 2A, the second flow-channel groove 2B, the third flow-channel groove 2C, and the fourth flow-channel groove 2D are located on the second location P2 side.

When gas accumulates in the flow-channel groove 2, it is easier for gas generated by the electrode in contact with separator 100 to cause side reactions. For example, when CO₂ is electrolyzed, hydrogen gas is generated as a result of water reduction due to a decrease in concentration caused by side reactions, while oxygen gas, which is generated at the cathode and has a high concentration at the anode exhaust side, reacts with it. This can lead to the generation of hydrogen peroxide. Since hydrogen peroxide deteriorates a separating membrane (diaphragm, electrolyte membrane), it is preferable that the blocking wall F partially closes off the flow-channel groove 2 to prevent gas accumulation. It is not effective for the blocking wall F to partially close off all turnaround areas of the serpentine flow channel shape or the former half of the flow channels 2 in the serpentine flow channel 10. By closing off a portion of the latter half of the flow-channel grooves 2 in the serpentine flow channel 10, rather than the former half, gas accumulation can be reduced.

The blocking wall F causes the fluid to be unable to flow through the flow-channel groove 2. In the part where the blocking wall F is provided, the fluid flows more easily into the porous layer of the electrode. Since the total amount of gas generated by the electrode reaction is small in the former half of the flow channel 10, it is not effective to provide the blocking wall F to change the flow-ability of the fluid in the former half of the flow channel 10. By providing a portion with different flow-ability in the latter half of the flow-channel groove 2, where gas accumulation is more likely to occur, and not providing the blocking wall F in the former half of the flow channel 10, gas accumulation can be reduced.

When the configuration of the separator 100 alone does not clarify the supply side and exhaust side, it is preferable to define the first location P1 on one end of the flow channel 10 and the second location P2 on the other end of the flow channel 10. Subsequently, the former half and the latter half of the flow channel and the former half and the latter half of each flow-channel groove 2 are defined appropriately with considering the arrangement of connection channels and manifolds. Moreover, the blocking wall F is preferably provided in the flow-channel groove 2 as described below. In other words, it is preferable that the blocking wall F is placed in only one former half or one latter half of the flow-channel grooves 2 in the same direction. The supply side and exhaust side can then be determined according to the position of the blocking wall F. When the flow channel 10 includes flow paths for fluid flowing from the first location P1 to the second location P2 and fluid flowing from the second location P2 to the first location P1, it is preferable that a blocking wall F is provided on the latter half of the flow-channel groove 2 where the fluid flows from the first location P1 to the second location P1 and a blocking wall F is provided on the latter half of the flow-channel groove 2 where the fluid flows from the second location P2 to the first location P1 (a blocking wall F is provided on the reverse side to the blocking wall F1 provided in the flow-channel groove 2 where the fluid flows from the first location P1 to the second location P1). In other words, when the flow channel includes multiple channels, the flowing direction of the fluid in each channel can be defined based on the blocking wall F provided on the latter half of the channel.

The blocking wall F may be composed of the same material as the flow-channel wall 1, or the blocking wall F may be composed of a different material. It is preferable that the blocking wall F includes metal or resin.

The blocking wall F in the flow-channel groove 2 is preferably provided in the turnaround area of the flow channel 10. The flow channel 10 includes straight areas and turnaround areas. Straight areas are sections connecting turnaround areas and mainly function as straight flow paths. The turnaround areas are sections that change the direction of fluid flow by approximately 180° (or roughly 180°). The flow channel 10 in FIG. 1 includes four turnaround areas: a first turnaround area T1, a second turnaround area T2, a third turnaround area T3, and a fourth turnaround area T4.

The section where the flow-channel groove 2 bends at 90° in the connection part between the flow channel 10 and the supply connection channel 3 can be regarded as a non-bend section because the flow-channel groove 2 can be connected to the flow channel 10 and the supply connection channel 3 without bending.

The section where the flow-channel groove 2 bends at 90° in the connection part between the flow channel 10 and the exhaust connection channel 5 can be regarded as a non-bend section because the flow-channel groove 2 can be connected to the flow channel 10 and the exhaust connection channel 5 without bending.

The first turnaround area T1 and the second turnaround area T2 are included in the former half of the flow-channel grooves 2. The third turnaround area T3 and the fourth turnaround area T4 are included in the latter half.

The boundary between the former half and the latter half of the flow-channel groove 2 is shown by a virtual line G (thick line) in FIG. 1. Since the flow channel 10 has a serpentine flow channel shape, the boundary between the former half and the latter half of the flow-channel groove 2 is stepped. The boundary between the former half and the latter half of the flow channel 10 is the virtual line G.

Even when the boundary between the former half and the latter half of the flow-channel groove 2 exists within a turnaround area, one turnaround area may include both the former half and the latter half of the flow-channel groove 2.

Next, the blocking wall F of the embodiment using the first blocking wall F1 as an example will be described. Preferably, the blocking wall F is provided in one or more of the flow-channel grooves 2. For example, when the flow channel 10 has a first flow-channel groove 2A, a second flow-channel groove 2B, a third flow-channel groove 2C and a fourth flow-channel groove 2D, the blocking wall F is provided in one or more of the flow-channel grooves 2. Hereinafter, an example where the first blocking wall F1 is provided in the first flow-channel groove 2A will be described. However, the same applies when the blocking wall F is provided in other flow-channel grooves 2.

The first blocking wall F1 provided in the first flow-channel groove 2A. The first blocking wall F1 is provided in the later half of the first flow-channel groove 2A and blocks a portion thereof. The first blocking wall F1 is provided in the fourth turnaround area T4 of the first flow-channel groove 2A.

FIG. 1 shows the length L1 of the first flow-channel groove 2A in the fourth turnaround area T4, the length L2 of the second flow-channel groove 2B in the fourth turnaround area T4, the length L3 of the third flow-channel groove 2C in the fourth turnaround area T4, and the length L4 of the fourth flow-channel groove 2D in the fourth turnaround area T4.

FIG. 1 also shows the width W1 of the first flow-channel groove 2A, the width W2 of the second flow-channel groove 2B, the width W3 of the third flow-channel groove 2C, and the width W4 of the fourth flow-channel groove 2D.

The boundary between the former half and the later half of the first flow-channel groove 2A exists between the second turnaround area T2 and the third turnaround area T3. The first blocking wall F1 is preferably provided in the third turnaround area T3 and/or the fourth turnaround area T4, which constitute the later half of the first flow-channel groove 2A.

When the length of the first blocking wall F1 is considered, the length of the first blocking wall is 1% or more and 100% or less of the length L5 of the turnaround area in which the first blocking wall F1 is provided in the first flow-channel groove 2A. More preferably, the length is 10% or more and 67% or less of the length L5, and even more preferably 17% or more and 33% or less of the length L5. When the length of the blocking wall F becomes too long, the portion that does not function as the flow channel 10 increases, which is not desirable.

When the blocking wall F is provided in the second flow-channel groove 2B, the length of the blocking wall F is preferably 1% or more and 100% or less of the length L4 of the turnaround area in which the blocking wall F is provided. More preferably, the length is 4% or more and 29% or less of the length L4, and even more preferably 3% or more and 18% or less of the length L4. When the length of the blocking wall F becomes too long, the portion that does not function as the flow channel 10 increases, which is not desirable.

When the blocking wall F is provided in the third flow-channel groove 2C, the length of the blocking wall F is preferably 1% or more and 100% or less of the length L3 of the turnaround area in which the blocking wall F is provided. More preferably, the length is 4% or more and 29% or less of the length L3, and even more preferably 7% or more and 14% or less of the length L3. When the length of the blocking wall F becomes too long, the portion that does not function as the flow channel 10 increases, which is not desirable.

When the blocking wall F is provided in the fourth flow-channel groove 2D, the length of the blocking wall F is preferably 3% or more and 100% or less of the length L2 of the turnaround area in which the blocking wall F is provided. More preferably, the length is 10% or more and 67% or less of the length L2, and even more preferably 17% or more and 33% or less of the length L2. When the length of the blocking wall F becomes too long, the portion that does not function as the flow channel 10 increases, which is not desirable.

When the length of the first blocking wall F1 is considered, the length of the first blocking wall F1 is preferably 0.1 times or more and 3 times or less the width W1 of the first flow-channel groove 2A, more preferably the0.3 times or more and 2 times or less the width W1, and even more preferably 0.5 times or more and 1 time or less the width W1. When the length of the blocking wall F becomes too long, the portion that does not function as the flow channel 10 increases, which is not desirable.

When the blocking wall F is provided in the second flow-channel groove 2B, the length of the blocking wall F provided in the second flow-channel groove 2B is preferably 0.1 times or more and 3 times or less the width W2 of the second flow-channel groove 2B, more preferably 0.3 times or more and 2 times or less the width W2 , and even more preferably 0.5 times or more and 1time or less the width W2 . When the length of the blocking wall F becomes too long, the portion that does not function as the flow channel 10 increases, which is not desirable.

When the blocking wall F is provided in the third flow-channel groove 2C, the length of the blocking wall F provided in the third flow-channel groove 2C is preferably 0.1 times or more and 3 times or less the width W3 of the third flow-channel groove 2C, more preferably 0.3 times or more and 2 times or less the width W3, and even more preferably 0.5 times or more and 1 time or less the width W3. When the length of the blocking wall F becomes too long, the portion that does not function as the flow channel 10 increases, which is not desirable.

When the blocking wall F is provided in the fourth flow-channel groove 2D, the length of the blocking wall F provided in the fourth flow-channel groove 2D is preferably 0.1 times or more and 3 times or less the width W4 of the fourth flow-channel groove 2D, more preferably 0.3 times or more and 2 times or less the width W4, and even more preferably 0.5 times or more and 1 time or less the width W4. When the length of the blocking wall F becomes too long, the portion that does not function as the flow channel 10 increases, which is not desirable.

The length of the first blocking wall F1 is preferably 0.1% or more and 1.7% or less of the length (total length) of the first flow-channel groove 2A, more preferably 0.2% or more and 1.1% or less of the length (total length) of the first flow-channel groove 2A, and even more preferably 0.3% or more and 0.6% or less of the length (total length) of the first flow-channel groove 2A. When the length of the blocking wall F becomes too long, the portion that does not function as the flow channel 10 increases, which is not desirable.

When the blocking wall F is provided in the second flow-channel groove 2B, the length of the blocking wall F provided in the second flow-channel groove 2B is preferably 0.1% or more and 1.7% or less of the length (total length) of the second flow-channel groove 2B, more preferably the length is 0.2% or more and 1.1% or less of the length (total length) of the second flow-channel groove 2B, and even more preferably 0.3% or more and 0.6% or less of the length (total length) of the second flow-channel groove 2B. When the length of the blocking wall F becomes too long, the portion that does not function as the flow channel 10 increases, which is not desirable.

When the blocking wall F is provided in the third flow-channel groove 2C, the length of the blocking wall F provided in the third flow-channel groove 2C is preferably 0.1% or more and 1.7% or less of the length (total length) of the third flow-channel groove 2C, more preferably the length is 0.2% or more and 1.1% or less of the length (total length) of the third flow-channel groove 2C, and even more preferably 0.3% or more and 0.6% or less of the length (total length) of the third flow-channel groove 2C. When the length of the blocking wall F becomes too long, the portion that does not function as the flow channel 10 increases, which is not desirable.

When the blocking wall F is provided in the fourth flow-channel groove 2D, the length of the blocking wall F provided in the fourth flow-channel groove 2D is preferably 0.1% or more and 1.7% or less of the length (total length) of the fourth flow-channel groove 2D, more preferably 0.2% or more and 1.1% or less of the length (total length) of the fourth flow-channel groove 2D, and even more preferably 0.3% or more and 0.6% or less of the length (total length) of the fourth flow-channel groove 2D. When the length of the blocking wall F becomes too long, the portion that does not function as the flow channel 10 increases, which is not desirable.

The first blocking wall F1 connects the flow-channel walls 1 that sandwich the first flow-channel groove 2A where the first blocking wall F1 is provided. For example, the first blocking wall F1 connects the first flow-channel wall 1A and the second flow-channel wall 1B that sandwich the first flow-channel groove 2A where the first blocking wall F1 is provided.

When the blocking wall F is provided in the second flow-channel groove 2B, the blocking wall F connects the flow-channel walls 1 that sandwich the second flow-channel groove 2B where the blocking wall F is provided. For example, the blocking wall F connects the second flow-channel wall 1B and the third flow-channel wall 1C that sandwich the first flow-channel groove 2A where the first blocking wall F1 is provided.

When the blocking wall F is provided in the third flow-channel groove 2C, the blocking wall F connects the flow-channel walls 1 that sandwich the third flow-channel groove 2C where the blocking wall F is provided. For example, the blocking wall F connects the third flow-channel wall 1C and the fourth flow-channel wall 1D that sandwich the third flow-channel groove 2C where the blocking wall F is provided.

When the blocking wall F is provided in the fourth flow-channel groove 2D, the blocking wall F connects the flow-channel walls 1 that sandwich the fourth flow-channel groove 2D where the blocking wall F is provided. For example, the blocking wall F connects the fourth flow-channel wall 1D and the fifth flow-channel wall 1E that sandwich the fourth flow-channel groove 2D where the blocking wall F is provided.

When the flow channel 10 includes a plurality of flow-channel grooves 2, the flow-channel grooves 2 are preferably parallel to each other.

The total length of the blocking walls F provided in the flow-channel groove 2 is preferably 0.2% or more and 6.7% or less of the length of one flow-channel groove 2, more preferably 0.7% or more and 4.5% or less of the length of one flow-channel groove 2, and even more preferably 1.1% or more and 2.2% or less of the length of one flow-channel groove 2. When the length of the blocking wall F becomes too long, the portion that does not function as the flow channel 10 increases, which is not desirable.

The following are examples illustrating the blocking wall F in further detail using various separator configurations.

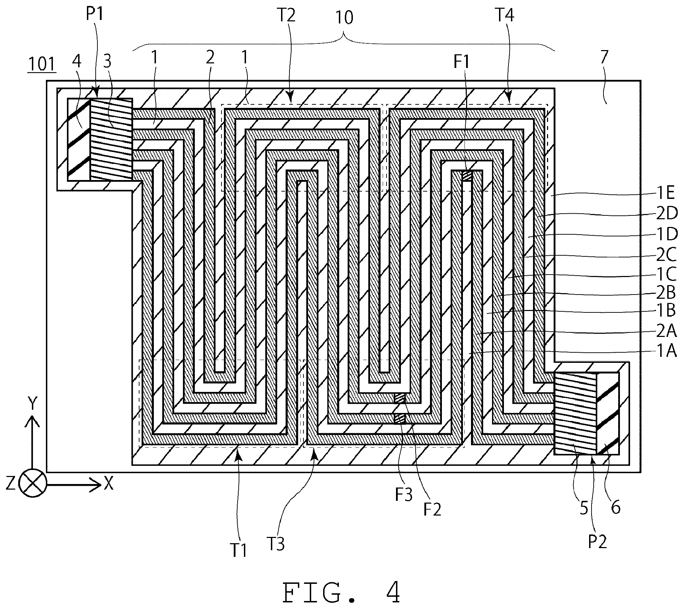

FIG. 4 shows a schematic diagram of a separator 101, which is a variation of the separator 100. The first flow-channel groove 2A is located innermost at the fourth turnaround area T4, and then the second flow-channel groove 2B, third flow-channel groove 2C, and fourth flow-channel groove 2D are arranged from the inside out. The blocking wall F is provided in the first flow-channel groove 2A, the second flow-channel groove 2B, and the third flow-channel groove 2C. From the perspective of changing fluid flow-ability, a blocking wall (the first blocking wall F1 in FIG. 4) is preferably provided in the flow-channel groove 2 (the first flow-channel groove 2A in FIG. 4), which folds innermost at the turnaround area (the fourth turnaround area T4 in FIG. 4) located nearest to the exhaust side in the latter half of the flow channel 10.

The separator 101 shown in FIG. 4 has the blocking wall F at the third turnaround area T3. At the third turnaround area T3, a second blocking wall F2 provided in the second flow-channel groove 2B and a third blocking wall F3 provided in the third flow-channel groove 2C are presented. The blocking walls F may be provided in different flow-channel grooves at different turnaround areas (e.g., the third turnaround area T3 and the fourth turnaround area T4) or in the same flow-channel grooves at different turnaround areas. The separator 101 changes fluid flow-ability in the latter half of the flow channel 10 by providing the blocking walls F in the latter half of the flow-channel groove 2, which can suppress gas accumulation in the fluid.

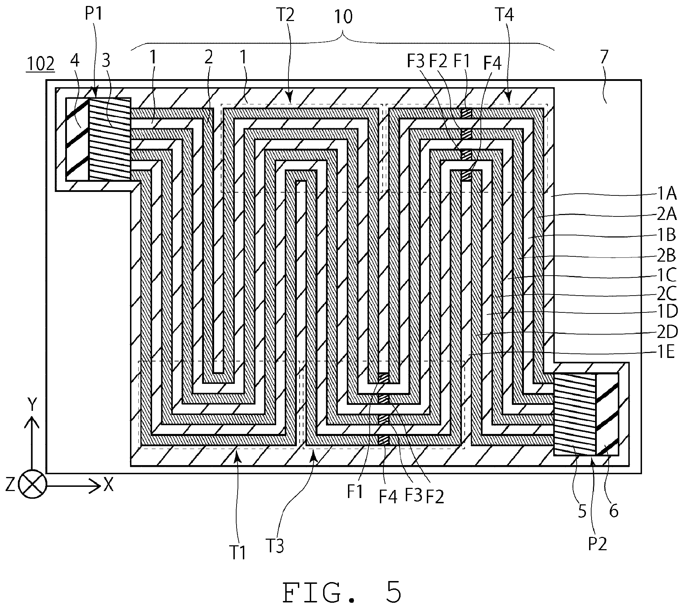

FIG. 5 shows a schematic diagram of a separator 102, which is a variation of the separator 100. The separator 102 has two of the first blocking walls F1 which are physically separated from one another, one is provided at the third turnaround area T3 and another one is provided at the fourth turnaround area T4 in the same first flow-channel groove 2A; two of the second blocking walls F2 which are physically separated from one another, one is provided at the third turnaround area T3 and another one is provided at the fourth turnaround area T4 in the same second flow-channel groove 2B; two of the third blocking walls F3 which are physically separated from one another, one is provided at the third turnaround area T3 and the fourth turnaround area T4 in the same third flow-channel groove 2C; and two of the fourth blocking walls F4 which are physically separated from one another, one is provided at the third turnaround area T3 and another one is provided at the fourth turnaround area T4 in the same fourth flow-channel groove 2D.

In the separator 102 shown in FIG. 5, the blocking walls F located at the third turnaround area T3 and the fourth turnaround area T4 are positioned on a single straight line. Because the fluid flow-ability changes at the center of the third turnaround area T3 and the fourth turnaround area T4, the separator 102 can reduce gas accumulation in the fluid.

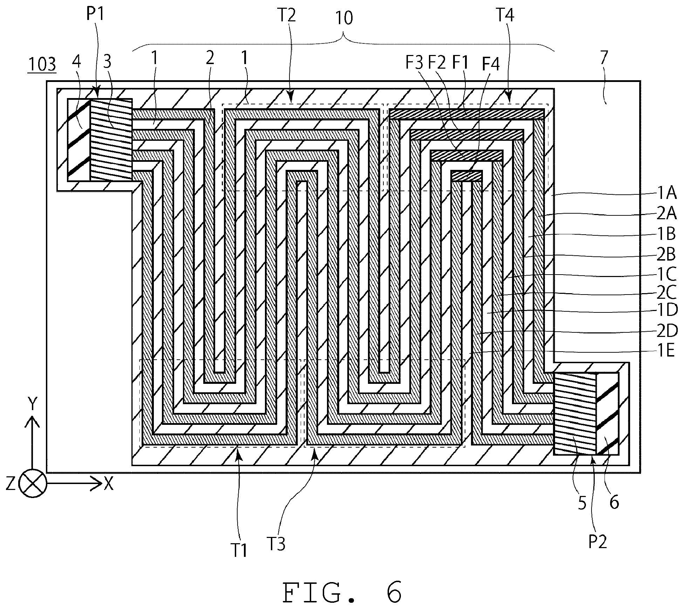

FIG. 6 shows a schematic diagram of a separator 103, which is a variation of the separator 100. The separator 103 has the first blocking wall F1 provided at the fourth turnaround area T4 of the first flow-channel groove 2A in the length direction of the first flow-channel groove 2A with a length L1, the length of the first blocking wall F1 is equal to or shorter than the length of the first flow-channel groove 2A at the fourth turnaround area T4 in the length direction of the first flow-channel groove 2A; the second blocking wall F2 provided at the fourth turnaround area T4 of the second flow-channel groove 2B in the length direction of the second flow-channel groove 2B with a length L2, the length of the second blocking wall F2 is equal to or shorter than the length of the second flow-channel groove 2B at the fourth turnaround area T4 in the length direction of the second flow-channel groove 2B; the third blocking wall F3 provided at the fourth turnaround area T4 of the third flow-channel groove 2C in the length direction of the third flow-channel groove 2C with a length L3, the length of the third blocking wall F3 is equal to or shorter than the length of the third flow-channel groove 2C at the fourth turnaround area T4 in the length direction of the third flow-channel groove 2C; and the fourth blocking wall F4 provided at the fourth turnaround area T4 of the fourth flow-channel groove 2D in the length direction of the fourth flow-channel groove 2D with a length L4, the length of the fourth blocking wall F4 is equal to or shorter than the length of the third flow-channel groove 2D at the fourth turnaround area T4 in the length direction of the fourth flow-channel groove 2D.

In the separator 103 shown in FIG. 6, the flow-channel grooves 2 are blocked by the blocking walls F along the length direction of the flow-channel grooves 2 at the fourth turnaround area T4 and beyond. The second blocking wall F2 is not provided in the former half of the second flow-channel groove 2B. Because there is a pressure difference between the supply side and the exhaust side of the separator 103, fluid also flows into the flow-channel grooves 2 after the fourth turnaround area T4. By changing the fluid flow-ability in the latter half of the flow channel 10, the separator 103 can reduce gas accumulation in the fluid.

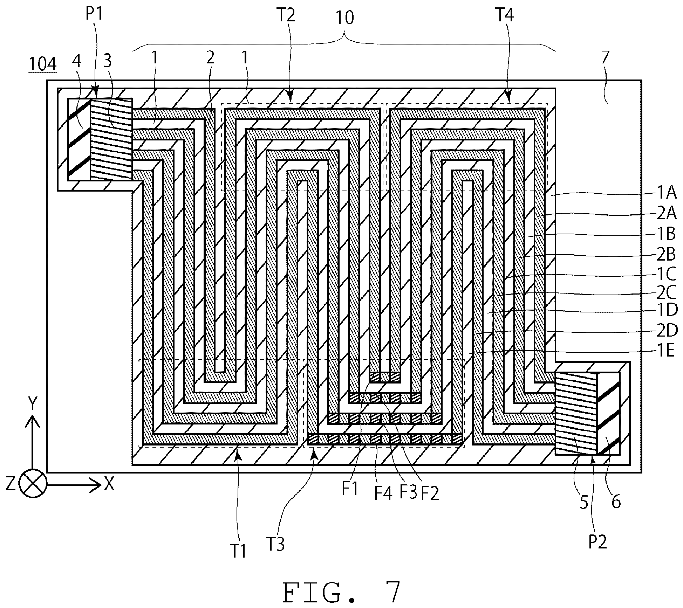

FIG. 7 shows a schematic diagram of a separator 104, which is a variation of the separator 100. The separator 104 has multiple blocking walls F in the first flow-channel groove 2A, the second flow-channel groove 2B, the third flow-channel groove 2C, and the fourth flow-channel groove 2D at the third turnaround area T3. The length of each blocking wall F is the same, but the number of blocking walls F varies depending on the length of each flow-channel groove 2 at the third turnaround area T3. The blocking walls F of the separator 104 can change fluid flow-ability in the latter half of the flow channel 10 and reduce gas accumulation in the fluid.

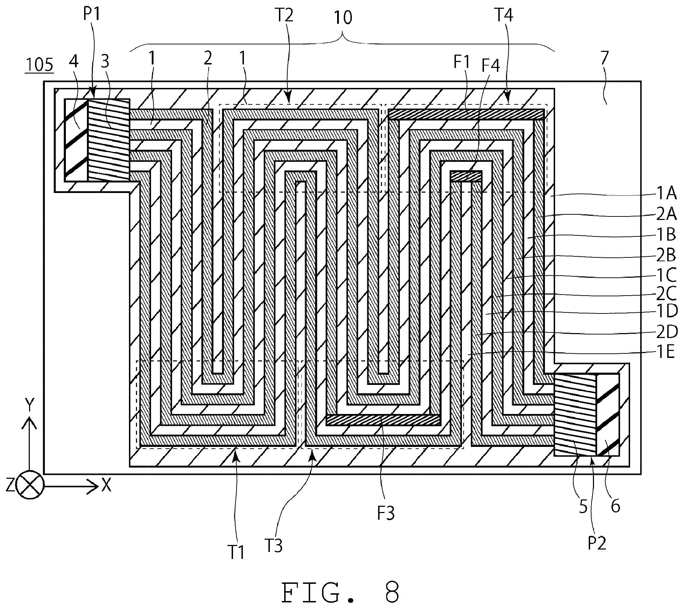

FIG. 8 shows a schematic diagram of a separator 105, which is a variation of the separator 100. The separator 105 has the third blocking wall F3 provided at the third turnaround area T3 of the third flow-channel groove 2C, the first blocking wall F1 provided at the fourth turnaround area T4 of the first flow-channel groove 2A, and the fourth blocking wall F4 provided at the fourth turnaround area T4 of the fourth flow-channel groove 2D. The blocking walls F of the separator 105 can change fluid flow-ability in the latter half of the flow channel 10 and reduce gas accumulation in the fluid.

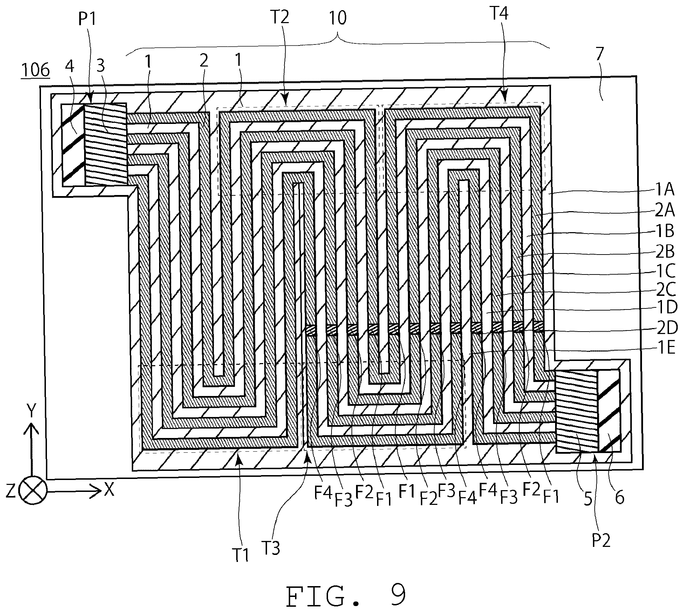

FIG. 9 shows a schematic diagram of a separator 106, which is a variation of the separator 100. The separator 106 has blocking walls F located between the third turnaround area T3 and the fourth turnaround area T4 and on the second location P2 side further than the fourth turnaround area T4. The blocking walls F of the separator 106 can change fluid flow-ability in the latter half of the flow channel 10 and reduce gas accumulation in the fluid.

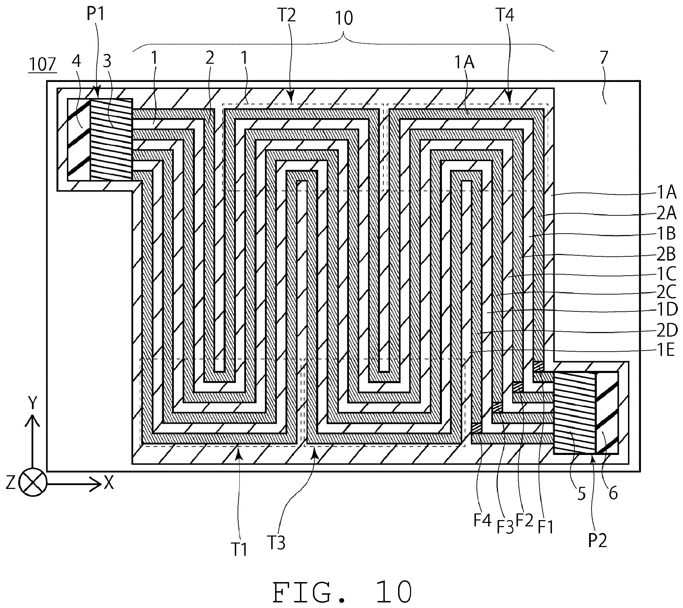

FIG. 10 shows a schematic diagram of a separator 107, which is a variation of the separator 100. The separator 107 has blocking walls F located on the second location P2 side further than the fourth turnaround area T4. All of the blocking walls F of the separator 107 are located near the exhaust manifold 6; however, the blocking walls F change fluid flow-ability in the latter half of the flow channel 10 and reduces gas accumulation in the fluid.

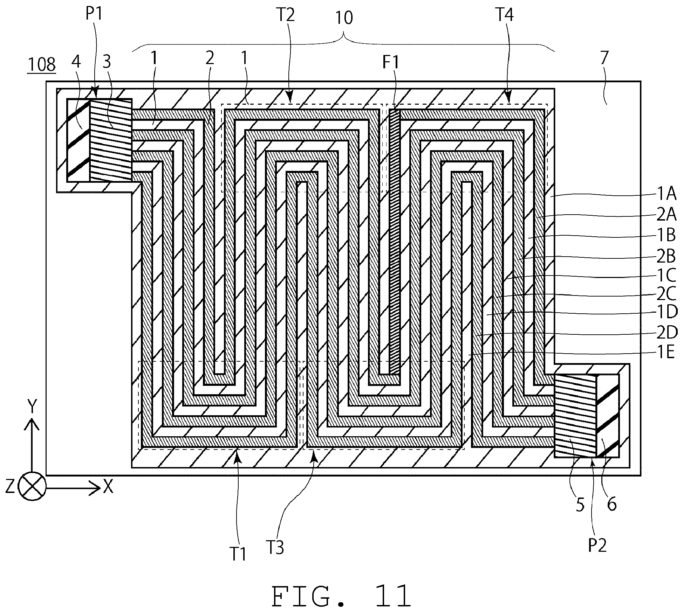

FIG. 11 shows a schematic diagram of a separator 108, which is a variation of the separator 100. The separator 108 has the first blocking wall F1 provided in the first flow-channel groove 2A between the third turnaround area T3 and the fourth turnaround area T4. The first blocking wall F1 of the separator 108 changes fluid flow-ability in the latter half of the flow channel 10 and reduces gas accumulation in the fluid.

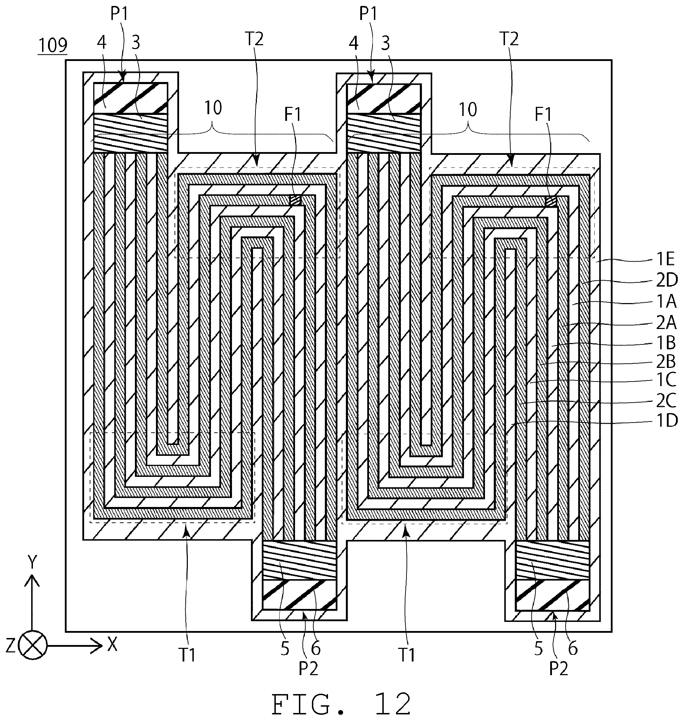

FIG. 12 shows a schematic diagram of a separator 109, which is a variation of the separator 100. The separator 109 has two independent flow channels 10 arranged parallel to each other. Each flow channel 10 includes the first turnaround area T1 and the second turnaround area T2. The first turnaround area T1 is a turnaround area included in the former half of the flow-channel groove 2, and the second turnaround area T2 is a turnaround area included in the latter half of the flow-channel groove 2. From the outside to the inside at the second turnaround area T2, there are the fourth flow-channel groove 2D, the first flow-channel groove 2A, the second flow-channel groove 2B, and the third flow-channel groove 2C in this order. The fourth flow-channel groove 2D is located between the fifth flow-channel wall 1E and the first flow-channel wall 1A. The first blocking wall F1 is provided in the first flow-channel groove 2A at the second turnaround area T2.

The first flow-channel groove 2A is located between the first flow-channel wall 1A and the second flow-channel wall 1B. The second flow-channel groove 2B is located between the second flow-channel wall 1B and the third flow-channel wall 1C. The third flow-channel groove 2C is located between the third flow-channel wall 1C and the fourth flow-channel wall 1D. From the outside to the inside at the fourth turnaround area T4, there are the fourth flow-channel groove 2D, the first flow-channel groove 2A, the second flow-channel groove 2B, and the third flow-channel groove 2C in this order. The first blocking wall F1 of the separator 109 changes fluid flow-ability in the latter half of the flow channels 10 and reduces gas accumulation in the fluid.

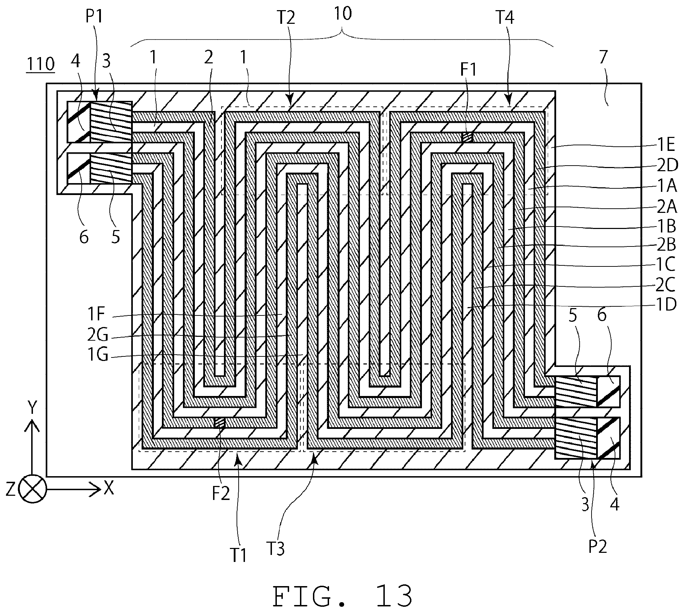

FIG. 13 shows a schematic diagram of a separator 110, which is a variation of the separator 100. The separator 110 has the first flow-channel groove 2A and the fourth flow-channel groove 2D through which fluid flows from the first location P1 side to the second location P2 side, and the second flow-channel groove 2B and the third flow-channel groove 2C through which fluid flows from the second location P2 side to the first location P1 side. In other words, the flow channel 10 has flow-channel grooves 2 where the fluid flow direction is reversed. The flow directions of the adjacent first flow-channel groove 2A and the second flow-channel groove 2B are reversed. The first blocking wall F1 is provided in the fourth turnaround area T4 of the first flow-channel groove 2A. The second blocking wall F2 is provided in the first turnaround area T1 of the second flow-channel groove 2B.

The former half of the first flow-channel groove 2A and the former half of the fourth flow-channel groove 2D are located on the first location P1 side. The latter half of the first flow-channel groove 2A and the latter half of the fourth flow-channel groove 2D are located on the second location P2 side. The former half of the second flow-channel groove 2B and the former half of the third flow-channel groove 2C are located on the second location P2 side. The latter half of the second flow-channel groove 2B and the latter half of the third flow-channel groove 2C are located on the first location P1 side.

The first flow-channel groove 2A is located between the first flow-channel wall 1A and the second flow-channel wall 1B. The second flow-channel groove 2B is located between the second flow-channel wall 1B and the third flow-channel wall 1C. The third flow-channel groove 2C is located between the third flow-channel wall 1C and the fourth flow-channel wall 1D. The fourth flow-channel groove 2D is located between the fifth flow-channel wall 1E and the first flow-channel wall 1A.

Although the flow directions in the first flow-channel groove 2A and the second flow-channel groove 2B are reversed, the first blocking wall F1 can change fluid flow-ability in the latter half of the flow-channel groove 2, thereby reducing gas accumulation in the fluid.

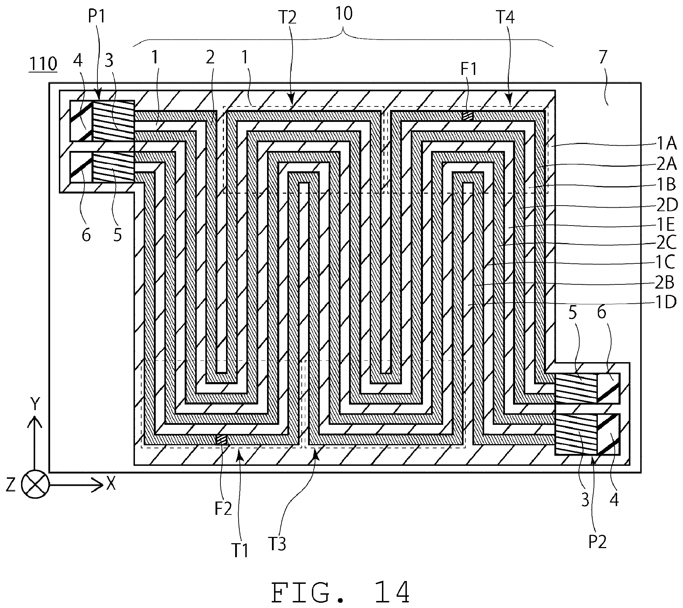

FIG. 14 shows a schematic diagram of a separator 111, which is a variation of the separator 110. The separator 111 has the first flow-channel groove 2A and the fourth flow-channel groove 2D through which fluid flows from the first location P1 side to the second location P2 side, and the second flow-channel groove 2B and the third flow-channel groove 2C through which fluid flows from the second location P2 side to the first location P1 side. In other words, the flow channel 10 has flow-channel grooves 2 where the fluid flow direction is reversed. The flow directions of the adjacent first flow-channel groove 2A and the second flow-channel groove 2B are reversed. The first blocking wall F1 is provided in the fourth turnaround area T4 of the first flow-channel groove 2A. The second blocking wall F2 is provided in the first turnaround area T1 of the second flow-channel groove 2B.

The former half of the first flow-channel groove 2A and the former half of the fourth flow-channel groove 2D are located on the first location P1 side. The latter half of the first flow-channel groove 2A and the latter half of the fourth flow-channel groove 2D are located on the second location P2 side. The former half of the second flow-channel groove 2B and the former half of the third flow-channel groove 2C are located on the second location P2 side. The latter half of the second flow-channel groove 2B and the latter half of the third flow-channel groove 2C are located on the first location P1 side.

The first flow-channel groove 2A is located between the first flow-channel wall 1A and the second flow-channel wall 1B. The second flow-channel groove 2B is located between the third flow-channel wall 1C and the fourth flow-channel wall 1D. The third flow-channel groove 2C is located between the third flow-channel wall 1C and the fifth flow-channel wall 1E. The fourth flow-channel groove 2D is located between the second flow-channel wall 1B and the fifth flow-channel wall 1E.

Although the flow directions in the first flow-channel groove 2A and the second flow-channel groove 2B are reversed, the first blocking wall F1 of the separator 110 can change fluid flow-ability in the latter half of the flow-channel groove 2, thereby reducing gas accumulation in the fluid.

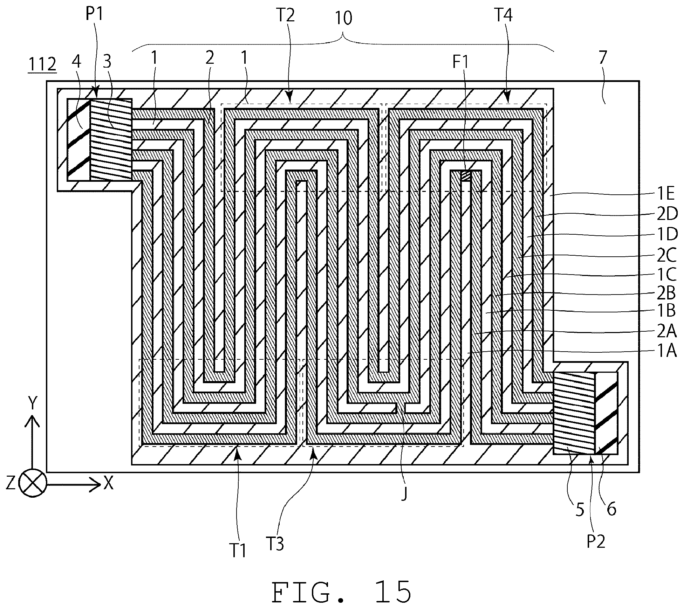

FIG. 15 shows a schematic diagram of a separator 111, which is a variation of the separator 101. The separator 111 has the first blocking wall F1 provided in the fourth turnaround area T4 of the first flow-channel groove 2A. Moreover, the separator 111 has a junction groove J connecting the second flow-channel groove 2B and the third flow-channel groove 2C at the third turnaround area T3. The junction groove J is a partially cut portion of the third flow-channel wall 1C. Fluid can flow through the junction groove J, which can also change fluid flow-ability. The junction groove J is preferably located in the latter half of the flow-channel groove 2. The first blocking wall F1 of the separator 111 can change fluid flow-ability in the latter half of the flow-channel groove 2, thereby reducing gas accumulation in the fluid.

### (SECOND EMBODIMENT)

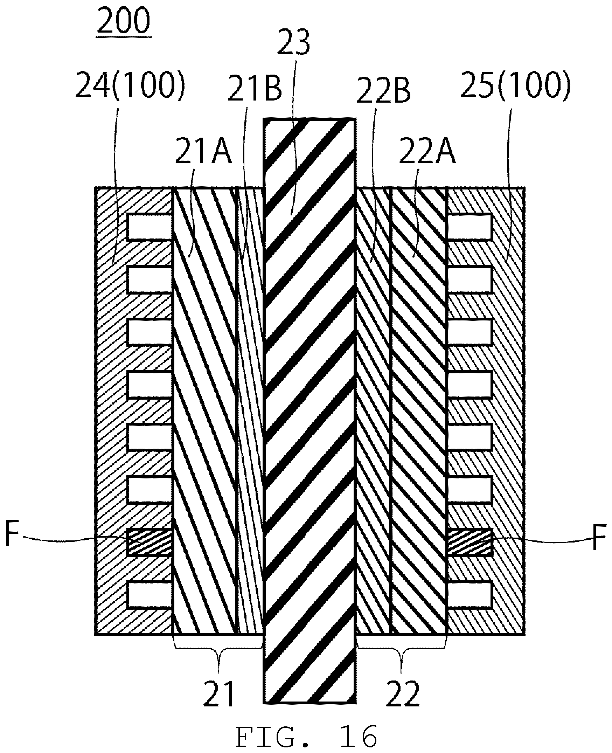

A second embodiment relates to an electrochemical cell. FIG. 16 through 17 show schematic diagrams of the electrochemical cell 200 according to the second embodiment. The electrochemical cell 200 is used for electrolytic device or a fuel cell.

An Electrochemical cell 200 comprises an anode 21, a cathode 22, a diaphragm (electrolyte membrane) 23, a first separator 24, and a second separator 25.

The first electrode (anode) 21 has a porous support 21A on the side of the first separator 24 and a catalyst layer 21B on the side of the diaphragm (electrolyte membrane) 23. Suitable materials are used for the porous support 21A and the catalyst layer 21B of the first electrode 21 depending on the anode reaction.

The second electrode (cathode) 22 has a porous support 22A on the side of the second separator 25 and a catalyst layer 22B on the side of the diaphragm (electrolyte membrane) 23. Suitable materials are used for the porous support 22A and the catalyst layer 22B of the second electrode 22 depending on the cathode reaction.

The diaphragm (electrolyte membrane) 23 is located between the first electrode 21 and the second electrode 22.

The diaphragm 23 is preferably a proton-conductive membrane or a neutral membrane. Suitable materials for the diaphragm 23 include one or more selected from a group consisting of sulfonic acid groups, sulfonimide groups, and sulfuric acid groups, such as a fluorinated polymer or an aromatic hydrocarbon polymer, or organic polymeric material. For example, a fluorinated polymer containing sulfonic acid groups is preferable. Examples of fluorinated polymers containing sulfonic acid groups include Nafion (trademark, DuPont), Flemion (trademark, Asahi Kasei Corporation), Celemeix (trademark, Asahi Kasei Corporation), Aquivion (trademark; Solvay Specialty Polymers) or Aciplex (trademark, AGC). Alternatively, various conductive membranes such as anion exchange membranes and porous membranes can be used in place of the proton-conductive membrane.

Examples of organic polymeric materials include poly ether, polysulfone, polyethylene, polypropylene, polyether sulfone, cellulose, and the like.

A porous membrane made of an organic polymer material used for the diaphragm 23 can be manufactured as follows. There are various manufacturing methods for the porous membrane of the organic polymer material, such as phase separation method, melt quenching method, extraction method, chemical treatment method, stretching method, irradiation etching method, melting method, foaming method, double layer method and hollow fiber formation method. The manufacturing method is not particularly limited. Among them, a non-solvent induced phase separation (NIPS) method involves contacting a uniform casting solution of an organic polymer dissolved in a solvent with a coagulant containing a non-solvent to create a concentration gradient between the solvent in the casting solution and the non-solvent in the coagulation bath. This drives the replacement of the solvent in the casting solution by the non-solvent, resulting in phase separation. Otherwise, a manufacturing method utilizing thermal-induced phase separation phenomenon that induces phase separation by cooling a polymer solution dissolved at high temperature is used. For materials like fluorinated resins, which are easy to fiberize, a method of applying shear force to create micro-pores within the membrane can be selected. Furthermore, combining these methods allows for obtaining a predetermined porous structure. The membrane can also be complexed with inorganic materials, or coated to control hydrophilicity on its surface. Layering multiple membranes is also acceptable.

The first separator 24 supplies fluids used for the reaction of the first electrode 21 and discharges fluids containing reactants. The first separator 24 is electrically connected to the first electrode 21.

The second separator 25 supplies fluids used for the reaction of the second electrode 22 and discharges fluids containing reactants. The second separator 25 is electrically connected to the second electrode 22.

The separator 100 according to the first embodiment is preferably used for the first separator 24 and/or the second separator 25. Either the first separator 24 or the second separator 25 may be a separator without the blocking walls F or junction grooves J.

The electrochemical cell 200 of FIG. 16 uses the separators 100 according to the first embodiment as the first separator 24 and the second separator 25.

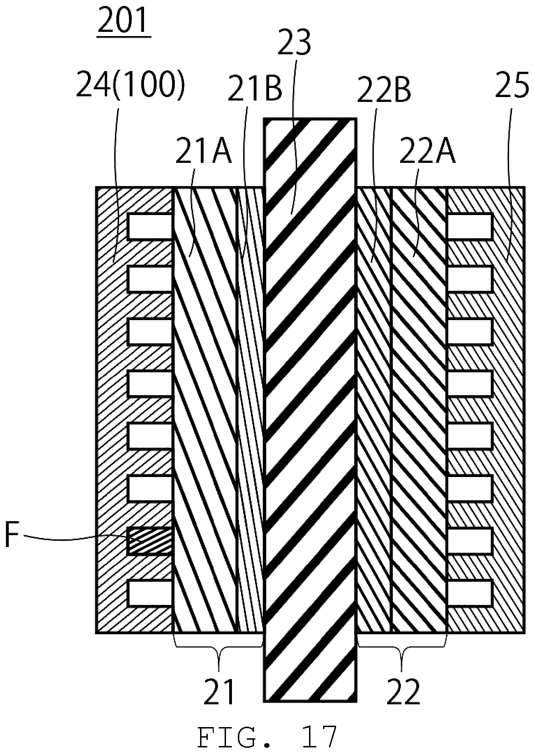

The electrochemical cell 200 of FIG. 17 uses the separator according to the first embodiment as the first separator 24.

By using the separator 100 according to the first or second embodiment, gas accumulation within the separator is reduced, thereby inhibiting degradation of the electrolyte membrane 23.

### (THIRD EMBODIMENT)

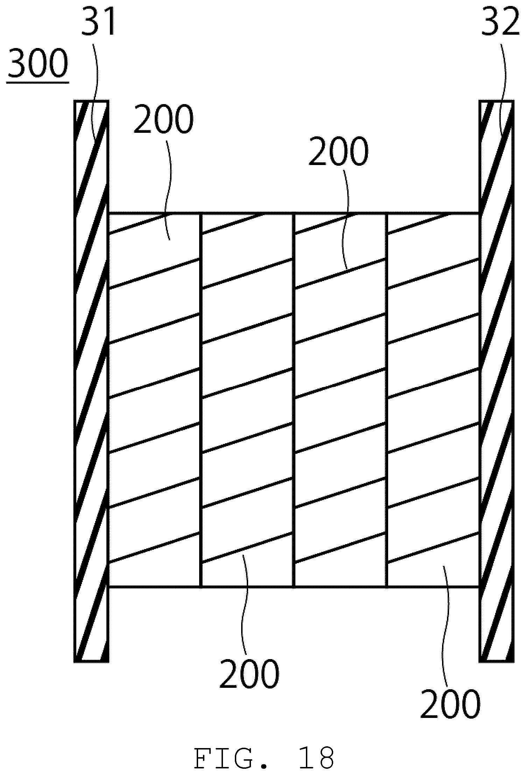

A third embodiment relates to a stack. FIG. 18 shows a schematic cross-sectional diagram of a stack 300 according to the third embodiment. The stack 300 according to the third embodiment comprises multiple electrochemical cells 200 connected in series. Clamping plates 31 and 32 are attached to both ends of the stack 300. Variations of the electrochemical cell can also be utilized for this embodiment.

When electrolysis is performed, the amount of hydrogen (H₂), carbon compounds, and other products generated by a single electrochemical cell 200 is small. Similarly, when power generation is performed, the amount of electricity generated by a single electrochemical cell 200 is small. Therefore, constructing a stack 300 with multiple electrochemical cells 200 connected in series increases product yield and output power.

### (FOURTH EMBODIMENT)

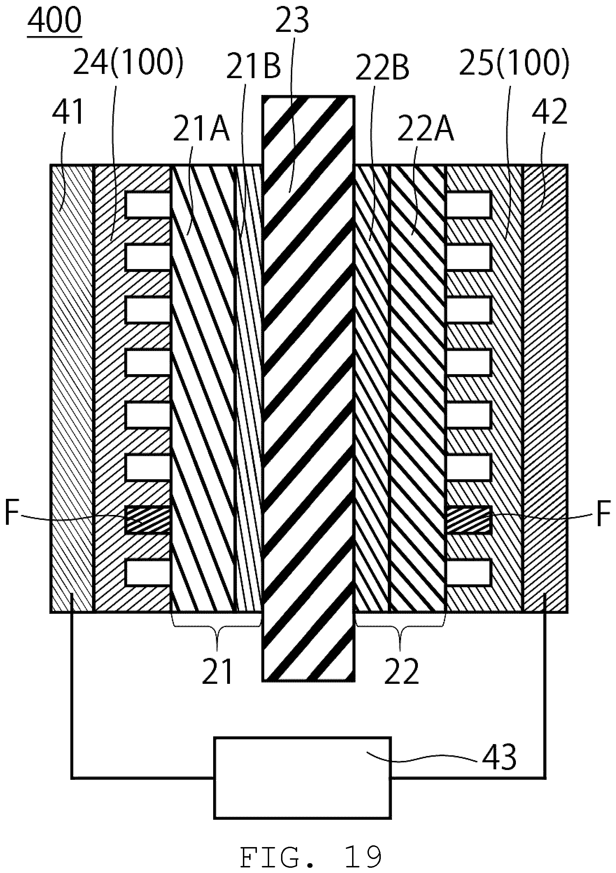

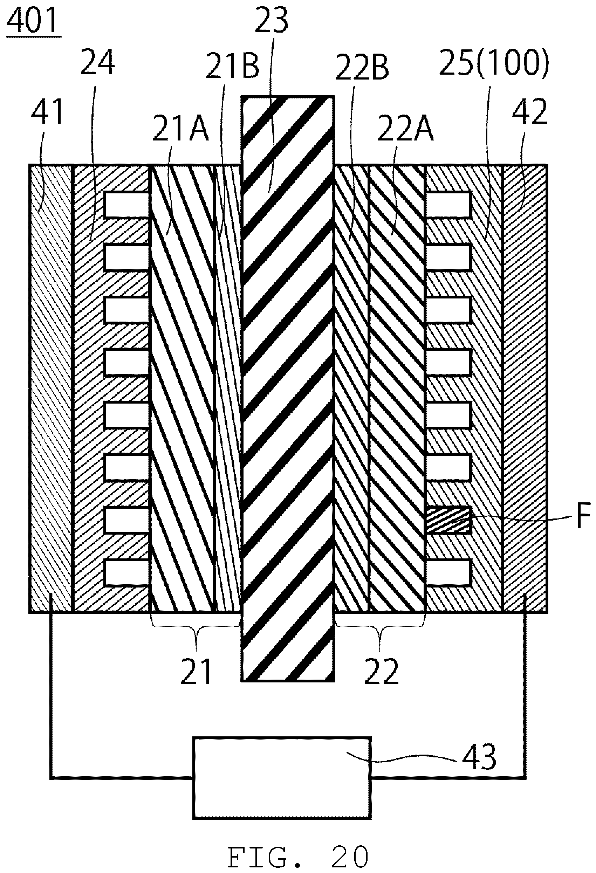

A fourth embodiment relates to an electrolytic device and a fuel cell. The electrolytic device and fuel cell use the electrochemical cell 200 or the stack 300 comprising the electrochemical cell 200. FIG. 19 shows a schematic diagram of an apparatus 400 according to the fourth embodiment. The apparatus 400 uses electrochemical cell 200. FIG. 20 shows a schematic diagram of an apparatus 401, which is another example according to the fourth embodiment. The apparatus 401 also utilizes electrochemical cells 200. The apparatuses 400 and 401 illustrate partial configurations of actual devices. Variations of the electrochemical cell can also be utilized for this embodiment.

Te apparatus 400 (and 401) comprise an electrochemical cell 200, an anode current collector 41, a cathode current collector 42 and a power supply or load 43.

The first separator 24 of the electrochemical cell 200 is attached to the anode current collector 41. The first separator 24 is electrically connected to the anode current collector 41.

The second separator 25 of the electrochemical cell 200 is attached to the cathode current collector 42. The second separator 25 is electrically connected to the cathode current collector 42.

The power supply or the load 43 is connected between the anode current collector 41 and the cathode current collector 42.

When the apparatus 500 (and 501) is electrolytic devices, the power supply 43 is connected between the anode current collector 41 and the cathode current collector 42.

When the apparatus 500 (and 501) is fuel cell, a load 43 is connected between the anode current collector 41 and the cathode current collector 42. The load 43 can be a power converter or a battery.

Hereinafter, the present invention will be described in more detail with reference to examples, but the present invention is not limited to these examples.

### Example 1

An electrochemical cell is fabricated according to FIG. 16, using the separators 100 according to FIG. 1 as the first separator 24 and the second separator 25.

### Example 2

An electrochemical cell is fabricated according to FIG. 16, using the separators 100 according to FIG. 4 as the first separator 24 and the second separator 25.

### Comparative Example 1

An electrochemical cell is fabricated according to FIG. 16, using separators without a blocking wall F as the first separator 24 and the second separator 25.

### Comparative Example 2

An electrochemical cell is fabricated according to FIG. 16, using separators with a blocking wall F also located at the first turnaround area T1 as the first separator 24 and the second separator 25.

### Comparative Example 3

An electrochemical cell is fabricated according to FIG. 16, using separators without a blocking wall F as the first separator 24 and the second separator 25.

### Comparative Example 4

An electrochemical cell is fabricated according to FIG. 16, using separators with a blocking wall F also located at the first turnaround area T1 as the first separator 24 and the second separator 25.

Electrolytic operations are performed under identical conditions for the electrochemical cells in Examples 1 and 2 and Comparative Examples 1 through 4, electrolyzing CO₂ to generate CO via electrolysis. Both Examples 1 and 2 exhibited a decrease in gas accumulation within the separators compared to Comparative Examples 1-4, enabling reduction of cell voltage increase even during long-term operation.

Additionally, fuel cell operations are performed under identical conditions for the electrochemical cells in Examples 1 and 2 and Comparative Example 1, using methanol as the fuel. Both Examples 1 and 2 exhibited a decrease in gas accumulation within the separators compared to Comparative Examples **1-4,** enabling suppression of cell voltage decrease even during long-term operation.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A separator (100) comprising;
a flow channel (10) comprising a first flow-channel wall (1A), a second flow-channel wall (1B), a first flow-channel groove (2A) between the first flow-channel wall (1A) and the second flow-channel wall (1B); and
one or more first blocking walls (F1) in the first flow-channel groove (2A), wherein
the first blocking walls (F1) close off a portion of the latter half of the first flow-channel groove (2A).

2. The separator (100) according to claim 1, wherein
the flow channel (10) has a serpentine flow channel shape where straight areas and turnaround areas (T) alternately repeat.

3. The separator (100) according to claim 2, wherein
a length of the first blocking walls (F1) is 1% or more and 100% or less of a length the turnaround area (T) of the flow channel (10).

4. The separator (100) according to claim any one of claims 1 to 3, wherein
a length of the first blocking walls (F1) is 0.1 times or more and 3 times or less a width of the first flow-channel groove (2A).

5. The separator (100) according any one of claims 1 to 4, wherein
the first blocking walls (F1) are provided at the turnaround area (T) of the flow channel (10), and
a length of the first blocking walls (F1) is 1% or more and 100% or less of a length the turnaround area (T) where the blocking walls (F1) are provided.

6. The separator (100) according any one of claims 1 to 5, wherein
a length of the first blocking walls (F1) is 0.1% or more and 1.7% or less of a length of the first flow-channel groove (2A).

7. The separator (100) according any one of claims 1 to 6, wherein
the first blocking walls (F1) connect the first flow-channel wall (1A) and the second flow-channel wall (1B).

8. The separator according any one of claims 1 to 7, wherein
the flow channel (10) further comprises a third flow-channel wall (1C) and a second flow-channel groove (2B) between the second flow-channel wall (1B) and the third flow-channel wall (1C),
the flow-channel (10) connects a first location (P1) and a second location (P2),
a former half of the first flow-channel groove (2A) and a former half of the second flow-channel groove (2B) are located on the first location (P1) side,
a latter half of the first flow-channel groove (2A) and a latter half of the second flow-channel groove (2B) are located on the second location (P2) side, and
the first flow-channel groove (2A) and the second flow-channel groove (2B) are parallel.

9. The separator (101) according to claim 8 further comprising one or more second blocking walls (F2) partially close off the second flow-channel groove (2B).

10. The separator (110) according any one of claims 1 to 7, wherein
the flow channel (10) further comprises a third flow-channel wall (1C) and a second flow-channel groove (2B) between the second flow-channel wall (1B) and the third flow-channel wall (1C),
the flow-channel (10) connects a first location (P1) and a second location (P2),
a former half of the first flow-channel groove (2A) and a latter half of the second flow-channel groove (2B) are located on the first location (P1) side, and
a latter half of the first flow-channel groove (2A) and a former half of the second flow-channel groove (2B) are located on the second location (P2) side.

11. The separator (110) according to claim 10 further comprising one or more second blocking walls (F2) partially close off the second flow-channel groove.

12. The separator (110) according any one of claims 1 to 7, wherein
the flow channel (10) further comprises a third flow-channel wall (1C), a fourth flow-channel wall (1D), a second flow-channel groove (2B) between the third flow-channel wall (1C) and the fourth flow-channel wall (1D),
the flow-channel (10) connects a first location (P1) and a second location (P2),
a former half of the first flow-channel groove (2A) and a latter half of the second flow-channel groove (2B) are located on the first location (P1) side, and
a latter half of the first flow-channel groove (2A) and a former half of the second flow-channel groove (2B) are located on the second location (P2) side.

13. The separator (110) according to claim 12 further comprising one or more second blocking walls (F2) partially close off the second flow-channel groove (2B).

14. An electrochemical cell (200) comprising:
a first electrode (21);
a second electrode (22);
a diaphragm (23) between the first electrode (21) and the second electrode (22);
a first separator (24) contacting the first electrode (21); and
a second separator (25) contacting the second electrode (22), wherein
the first separator (24) or/an the second separator (25) is the separator (100) according to any one of claims 1 to 13.

15. An apparatus (400) comprising:
the electrochemical cell (200) according to claim 14. wherein
the apparatus (400) is an electrolytic device or a fuel cell.
